# EUROPEAN PATENT SPECIFICATION

(11) **EP 4 281 590 B1**
(45) Date of publication and mention of the grant of the patent: **29.10.2025**
(21) Application number: 22702058.3
(22) Date of filing: 21.01.2022
(51) Int. Cl.: C21B 13/02, C21B 13/00, F27B 1/20, F27B 1/21, F27D 99/00, F27D 3/00

(54) **ARRANGEMENT AND PROCESS FOR CHARGING IRON ORE TO, AND/OR DISCHARGING SPONGE IRON FROM, A DIRECT REDUCTION SHAFT**
ANORDNUNG UND VERFAHREN ZUM LADEN VON EISENERZ ZU UND/ODER ENTLADEN VON EISENSCHWAMM AUS EINER DIREKTREDUKTIONSWELLE
DISPOSITIF ET PROCÉDÉ POUR LE CHARGEMENT DE MINERAI DE FER ET/OU POUR DÉCHARGER DE FONTE BRUTE, D'UN FOUR À RÉDUCTION DIRECTE VERTICAL.

(30) Priority: 22.01.2021 SE 2150068
(43) Date of publication of application: 29.11.2023
(73) Proprietor: HYBRIT Development AB, 111 64 Stockholm (SE)
(72) Inventor: MOHSENI-MÖRNER, Farzad, 163 55 Spånga (SE)
(74) Representative: Zacco Sweden AB
(86) International application number: PCT/SE2022/050061
(87) International publication number: WO 2022/159022

(56) References cited:
- WO-A1-2020/245070
- CA-A1- 2 035 723
- CN-A- 101 693 933
- JP-A- S5 326 708
- US-A- 4 089 429

## Description

### TECHNICAL FIELD

The present invention relates to an arrangement for charging iron ore to a direct reduction shaft, as well as a process for charging iron ore to a direct reduction shaft utilizing such an arrangement. The invention further relates to an arrangement for discharging sponge iron from a direct reduction shaft, as well as a process for discharging sponge iron from a direct reduction shaft utilizing such an arrangement. Moreover, the invention relates to a system for the production of sponge iron comprising such arrangements, and a process for direct reduction of iron ore.

### BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2 800 million tonnes in 2050 of which 50% is expected to originate from virgin iron sources. Steel is also the world's most recycled material with a very high recycling grade due to the metals' ability to be used over and over again after remelting, using electricity as the primary energy source.

Thus, steel is a cornerstone of modern society with an even more significant role to play in the future.

Steel is mainly produced via three routes:
i) Integrated production using virgin iron ores in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.
ii) Scrap-based production using recycled steel, which is melted in an electric arc furnace (EAF) using electricity as the primary source of energy. This process is commonly also referred to as 'electric steelmaking'.
iii) Direct reduction production based on virgin iron ore, which is reduced in a direct reduction (DR) process with a carbonaceous reducing gas to produce sponge iron. The sponge iron is subsequently melted together with scrap in an EAF to produce steel.

The term crude iron is used herein to denote all irons produced for further processing to steel, regardless of whether they are obtained from a blast furnace (i.e. pig iron), or a direct reduction shaft (i.e. sponge iron).

Although the above-named processes have been refined over decades and are approaching the theoretical minimum energy consumption, there is one fundamental issue not yet resolved. Reduction of iron ore using carbonaceous reductants results in the production of CO2 as a by-product. For every ton steel produced in 2018, an average of 1.83 tonnes of CO2 were produced. The steel industry is one of the highest CO2-emitting industries, accounting for approximately 7% of CO2 emissions globally. Excessive CO2-generation cannot be avoided within the steel production process as long as carbonaceous reductants are used.

The HYBRIT initiative has been founded to address this issue. HYBRIT, short for HYdrogen BReakthrough Ironmaking Technology - is a joint venture between SSAB, LKAB and Vattenfall, funded in part by the Swedish Energy Agency, and aims to reduce CO2 emissions and decarbonize the steel industry.

Central to the HYBRIT concept is a direct reduction based production of sponge iron from virgin ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of CO2.

In prior art fossil-based direct reduction systems, as well as in the proposed hydrogen-based direct reduction systems, it is imperative that iron ore may be charged safely to the direct reduction shaft. Since the process gases passing through the shaft are highly combustible (typically comprising hydrogen, carbon monoxide and hydrocarbons in the fossil-based process), it is essential that formation of explosive air/process gas mixtures is avoided when introducing ore to the shaft. This is typically achieved by ensuring that only an inert (i.e. inflammable non-oxidant) seal gas, and not air, is introduced to the shaft when charging ore, and that no process gas escapes the shaft uncontrolled via the charging arrangement. Exactly how this is achieved depends on the design of the direct reduction system.

Typically in DR shafts operating at low pressure (e.g. ≤ 2 bar), such as the Midrex process, a dynamic gas seal is arranged at a seal leg connecting an ore charge charging vessel to the direct reduction shaft. Inert seal gas is introduced at a pressure exceeding the operating pressure of the DR shaft at one or more points in the seal leg. This higher-pressure seal gas prevents air from being introduced into the DR shaft with the iron ore charge, as well as preventing process gas from escaping the DR shaft through the seal leg.

Typically in DR shafts operating at higher pressures (e.g. > 2 bar), such as the Hyl ZR process, a charging vessel is arranged at the inlet to the direct reduction shaft. Ore is charged to the pressurizable charging vessel, which is first flushed with an inert seal gas to exclude air, then pressurized to approximately the operating pressure of the DR shaft using the seal gas. Once pressurized, the valve separating the charge charging vessel and DR shaft is opened to allow the iron ore charge to be introduced to the shaft, together with seal gas. Once the charging vessel is emptied of ore, the charging vessel is resealed and flushed again with seal gas to evacuate process gases from the charging vessel. Finally, the charging vessel can be opened to the atmosphere and refilled with ore. Typically, multiple charging vessels are arranged in parallel to supply ore to the DR shaft.

Similar arrangements are also typically located at the discharge end of the direct reduction shaft in order to safely discharge the sponge iron produced. Patent documents CN 101 693 933 A, US 4 089 429 A, JP S53 26708 A and WO 2020/245070 A further disclose charging/ discharging arrangements for the direct reduced iron process.

There remains a need for improved means of charging iron ore to, and/or discharging sponge iron from, a direct reduction shaft.

### SUMMARY OF THE INVENTION

The inventors of the present invention have identified a number of shortcomings with prior art means of charging iron ore to a direct reduction shaft.

Prior art means of charging ore typically require the use of large volumes of seal gas. Seal gas is typically produced on-site, using for example an air separator unit when the seal gas is nitrogen. The large volume of seal gas required leads to increased capital and operating expenses for the direct reduction system.

Additionally, seal gas is inevitably introduced into the process gas using prior art ore charging means. As described above, the seal gases typically used, such as nitrogen, must be inert (i.e. not form explosive mixtures with process gas), and therefore are retained in the process gas. However, the other components of the process gas are typically either consumed by reaction (e.g. H₂, CO, CH₄) or removed from circulation (e.g. H₂O, CO₂). This means that seal gas gradually accumulates in the process gas and would comprise an ever-increasing proportion if no action is taken. In order to avoid such a situation, a proportion of the process gas is typically bled from the process gas circuit and flared in order to maintain a suitable concentration of inert components in the process gas. This is economically deleterious, in particular for proposed hydrogen-based direct reduction processes since the reducing gas in such a case is expected, at least initially, to be more expensive than fossil-based reducing gases. If the reducing gas is fossil-based, bleeding the process gas is also of negative environmental consequence as it leads to increased CO2 emissions.

The outlet of the direct reduction shaft, wherefrom the produced sponge iron is discharged, also requires sealing, and prior art means of discharging sponge iron suffer from the same disadvantages as prior art means of charging ore.

It would be advantageous to achieve a means for charging iron ore to a direct reduction shaft and/or discharging sponge iron from a direct reduction shaft that overcomes, or at least alleviates, at least some of the above-mentioned shortcomings. In particular, it would be desirable to enable a means for charging iron ore to a direct reduction shaft and/or discharging sponge iron from a direct reduction shaft that decreases the need for seal gas and potentially avoids the need to bleed process gas, thus potentially decreasing the operating expenses of the direct reduction plant.

To better address one or more of these concerns, a process for charging iron ore to a direct reduction shaft having the features defined in the independent claim is provided.

The process comprises the steps:
a) setting an ore outlet of an ore charging vessel in a sealed state;
b) setting an ore inlet of the ore charging vessel in an open state;
c) charging the ore charging vessel with iron ore via the ore inlet;
d) setting the ore inlet in a sealed state;
e) evacuating gas from the ore charging vessel by application of vacuum;
f) refilling the ore charging vessel with a seal gas; and
g) setting the ore outlet in an open state to charge iron ore to the direct reduction shaft.

The seal gas is a non-oxidant gas.

According to the disclosed process, the ore-filled charging vessel is evacuated by application of a vacuum before refilling with a selected non-oxidant seal gas. Since the application of vacuum removes substantially all air from the charging vessel, flushing of the charging vessel with multiple volumes of seal gas to secure removal of oxygen is not required. This may be compared to the volumes of seal gas used to flush the charging vessel in prior art methods, which is typically about 5 times the volume of the charging vessel per charge.

According to another aspect of the present invention, the objects of the invention are attained by a process for discharging sponge iron from a direct reduction shaft according to the appended independent claim.

The process for discharging sponge iron comprises the steps:
i) setting an iron outlet and an iron inlet of an iron discharging vessel in a sealed state;
ii) evacuating gas from the iron discharging vessel by application of vacuum;
iii) refilling the iron charging vessel with a seal gas;
iv) setting an iron inlet of the iron discharging vessel in an open state;
v) charging the iron discharging vessel with sponge iron via the iron inlet; and
vi) setting the iron inlet in a sealed state;
wherein the seal gas is a non-oxidant gas.

In a similar manner as for the process for charging iron ore, the use of vacuum removes substantially all air from the discharging vessel, meaning that a lesser volume of seal gas is required to ensure that that the atmosphere in the discharge vessel is sufficiently non-reactive prior to opening the vessel to the direct reduction shaft.

The following considerations are independently applicable both to the process for charging iron ore, and to the process for discharging sponge iron, unless it is specifically indicated otherwise.

Vacuum may be applied to bring the ore charging vessel (and alternatively, or in addition, to the iron discharging vessel) to a pressure of about 100 mbar or less, preferably about 10 mbar or less, even more preferably about 1 mbar or less, at normal temperature (20 °C). The use of a relatively strong vacuum permits the use of fewer vacuum evacuation/refill cycles prior to charging iron ore to the direct reduction shaft (or discharging sponge iron from the direct reduction shaft).

The seal gas may be selected from the list consisting of hydrogen, methane, biogas, syngas, carbon dioxide, nitrogen, purified flue gas, and combinations thereof. That is to say that the seal gas may be a typical inert (inflammable non-oxidant) gas, such as carbon dioxide, nitrogen or purified flue gas. However, the processes described herein permit the introduction of substantially all of the seal gas used into the direct reduction shaft, and seal gas is therefore not wasted, in contrast to prior art methods where large volumes of seal gas are used to purge the charging vessel or maintain the dynamic seal. Moreover, since the disclosed processes substantially empty the charging/discharging vessel of air prior to refilling with the seal gas, mixtures of air and seal gas are avoided. Together, these features allow gases other than inert gases to be used as the seal gas, for example more expensive and/or potentially flammable gases. Therefore, purely reducing gases such as hydrogen gas, reducing and carburizing gases such as methane, biogas or syngas, or indirectly carburizing gases such as carbon dioxide may be used as the seal gas. The use of such gases means that introduction of inert gases into the direct reduction shaft may be avoided, and bleeding of the process gas may therefore not be required in order to prevent accumulation of inert components in the process gas. This may significantly improve utilization of the process gases and decrease operating costs. The methane may be biomethane and/or the syngas may be bio-syngas. The carbon dioxide may be derived from a biological source, i.e. non-fossil CO2.

In some cases, only a single vacuum evacuation/refill cycle may be sufficient to safely allow charging of iron ore to the direct reduction shaft (and alternatively, or in addition, to safely allow discharging of sponge iron from the direct reduction shaft). In such a case, since only air is removed by the vacuum and the refilled gas is introduced into the direct reduction shaft, this may avoid the use of any excess of gas in the charging/discharging process, over and above the amount of seal gas required to bring the charging/discharging vessel to the relevant charging pressure.

The process may further comprise steps of removing gas from the ore charging vessel (and alternatively, or in addition, from the iron discharging vessel) by application of vacuum; and refilling the vessel with an inert gas. These steps may be performed after the step d) of setting the ore inlet in a sealed state, but prior to step e) of evacuating gas from the ore charging vessel by application of vacuum (or after step i, but prior to step ii in the process for discharging sponge iron). That is to say that an additional vacuum evacuation/refill cycle may be performed. This means that even if a relatively poor vacuum is used, such as greater than about 100 mbar, the process may be performed stagewise by first performing an initial vacuum evacuation/refill cycle to provide a gas mixture in the vessel comprising mostly the inert gas, but with some remaining air. The subsequent vacuum evacuation/refill cycle should suffice to provide a gas mixture in the vessel comprising essentially of the seal gas for the purpose of the invention (i.e. avoiding the formation of potentially explosive gas/air mixtures).

Of course, multiple vacuum evacuation/refill cycles may be performed as necessary, such as a total of three or four vacuum evacuation/refill cycles, instead of the single and double vacuum evacuation/refill cycles already described. However, the total quantity of inert gas required in the process increases with each vacuum evacuation/refill cycle performed, and therefore preferably as few vacuum evacuation/refill cycles as possible are used. Where more than one vacuum evacuation/refill cycles are preformed, refill in the initial cycle(s) is performed using inert gas, and refill using the seal gas is performed only in the final refill step.

The inert gas may be selected from the list consisting of carbon dioxide, nitrogen, purified flue gas, and combinations thereof. The seal gas may be the same or different to the inert gas. Where the seal gas is different from the inert gas, the seal gas may be selected from the list consisting of hydrogen, methane, biogas, syngas, carbon dioxide, and combinations thereof. Using a seal gas that is not an inert gas helps prevent accumulation of inert gas in the process gases and thus helps avoid the need to bleed process gas, as previously described. The methane may be biomethane and/or the syngas may be bio-syngas. The carbon dioxide may be derived from a biological source, i.e. non-fossil CO2.

Specifically the process for charging iron ore to a direct reduction shaft may comprise further steps of setting the ore outlet in a sealed state; removing a process gas from the ore charging vessel by application of vacuum; refilling the ore charging vessel with a gas selected from air, inert gas, and combinations thereof; and setting the ore inlet in an open state. The inert gas may be selected from carbon dioxide, nitrogen, purified flue gas, and combinations thereof. In this manner, the charging vessel may be prepared for introduction of a further charge of iron ore whilst ensuring an effective use of gases.

According to another aspect of the invention, the objects of the invention are achieved by a process for direct reduction of iron ore to sponge iron according to the appended independent claim. The process comprises introducing a seal gas consisting essentially of a gas selected from hydrogen, methane, biogas, and syngas, or combinations of carbon dioxide with hydrogen, methane, biogas, or syngas, or combinations thereof, to a direct reduction shaft in conjunction with charging the iron ore to the direct reduction shaft and/or in conjunction with discharging a sponge iron from the direct reduction shaft. The methane may be biomethane and/or the syngas may be bio-syngas. The carbon dioxide may be derived from a biological source, i.e. non-fossil CO2. By "introducing [...] in conjunction with", it is meant that the seal gas is introduced to the direct reduction shaft using the processes for charging iron ore to a direct reduction shaft and/or discharging sponge iron from the direct reduction shaft as described herein and in the appended independent claims.

Since a gas is unavoidably introduced to the direct reduction shaft in conjunction with charging and/or discharging of solids to the direct reduction shaft, by introducing such seal gases that reduce and/or optionally carburize the iron ore, the process introduces only gases serving a purpose in the direct reduction and avoids introducing gases that may have a deleterious effect on the process. Gases that may have a deleterious effect on the process are for example inert gases such as nitrogen that may accumulate in the process gas and decrease the reducing capacity of the process gas if allowed to accumulate to excessive concentrations. Normally, bleeding of process gas is necessary to ameliorate the effects of such accumulation. Therefore, the disclosed process permits a more effective use of process gas and thus may decrease operating expenses of the process.

The process may comprise introducing make-up gas into the direct reduction shaft in countercurrent flow to the iron ore. The make-up gas is selected from hydrogen and bio-syngas, and may be the same or different to the seal gas. This make-up gas may ensure that sufficient reducing gas is introduced to the process to sufficiently reduce the iron ore to sponge iron.

According to a further aspect of the invention, the objects of the invention are achieved by an arrangement for charging iron ore to a direct reduction shaft according to the appended independent claim. The arrangement for charging iron ore comprises
- an ore charging vessel;
- a source of vacuum; and
- a source of a seal gas.

The source of vacuum and the source of the seal gas are each arranged in controllable fluid connection with the ore charging vessel.

The seal gas is a non-oxidant gas.

Such an arrangement facilities performing the process for charging iron ore to a direct reduction shaft as described herein and in the appended independent claim. The ore charging vessel, or more specifically the ore outlet of the ore charging vessel, is typically arranged in communication with the inlet of the direct reduction shaft, allowing ore to pass from the ore charging vessel to the direct reduction shaft.

According to yet a further aspect of the invention, the objects of the invention are achieved by an arrangement for discharging sponge iron from a direct reduction shaft according to the appended independent claim.

The arrangement for discharging sponge iron comprises:
- an iron discharging vessel;
- a source of vacuum; and
- a source of a seal gas;

The source of vacuum and the source of the seal gas are each arranged in controllable fluid connection with the iron discharging vessel.

The seal gas is a non-oxidant gas.

Such an arrangement facilities performing the process for discharging sponge iron from a direct reduction shaft as described herein and in the appended independent claim. The iron discharging vessel, or more specifically the iron inlet of the iron discharging vessel, is typically arranged in communication with the outlet of the direct reduction shaft, allowing sponge iron to pass from the direct reduction shaft to the iron discharging vessel.

The following considerations are independently applicable both to the arrangement for charging iron ore, and to the arrangement for discharging sponge iron, unless it is specifically indicated otherwise.

The ore charging vessel may comprise a sealable ore inlet, a sealable ore outlet, and at least one gas conduit. The iron discharging vessel may comprise a sealable iron inlet, a sealable iron outlet, and at least one gas conduit. The source of vacuum and/or the source of the seal gas may be arranged in fluid connection with the gas conduit.

Regarding the source of a seal gas, the seal gas may be selected from the list consisting of hydrogen, methane, biogas, syngas, carbon dioxide, nitrogen, purified flue gas, and combinations thereof. The methane may be biomethane and/or the syngas may be bio-syngas. The carbon dioxide may be derived from a biological source, i.e. non-fossil CO2.

The arrangement(s) may further comprise a source of an inert gas. The source of the inert gas may be arranged in controllable fluid connection with the ore charging vessel and/or with the iron discharging vessel. The inert gas may be different from the seal gas.

If the arrangement(s) further comprises a source of an inert gas, then the inert gas may selected from the list consisting of carbon dioxide, nitrogen, purified flue gas, and combinations thereof; and the seal gas may be selected from the list consisting of hydrogen, methane, biogas, syngas, carbon dioxide, and combinations thereof. The methane may be biomethane and/or the syngas may be bio-syngas. The carbon dioxide may be derived from a biological source, i.e. non-fossil CO2.

The arrangement(s) may be configured to attain a pressure of about 100 mbar or less at normal temperature (20 °C) in the ore charging vessel (and alternatively, or in addition in the iron discharging vessel), preferably about 10 mbar or less, even more preferably about 1 mbar or less. This may require that:
the source of vacuum is sufficiently strong to bring the vessel to the desired pressure, and/or
the vessel is configured to tolerate such a low pressure (i.e. the vessel may be a vacuum vessel), and/or
any openings in the vessel such as the sealable inlet, sealable outlet and/or gas conduit(s) are sealable to an such an extent that they may permit the source of vacuum to maintain such a pressure in the vessel.

According to yet another aspect of the invention, the objects of the invention are achieved by a system for the production of sponge iron according to the appended independent claim. The system comprises an arrangement for charging iron ore as described herein, and/or an arrangement for discharging sponge iron as described herein. That is to say that the system comprises an arrangement for charging iron ore as described herein; or an arrangement for discharging sponge iron as described herein; or an arrangement for charging iron ore and an arrangement for discharging sponge iron as described herein. The system may further comprise a charging arrangement and/or discharging arrangement as conventionally known in the art. The system further comprises a direct reduction shaft; and a source of make-up gas arranged in fluid connection with the direct reduction shaft. If the system comprises an arrangement for charging iron ore, the ore charging vessel may be arranged in communication with an inlet of the direct reduction shaft. If the system comprises an arrangement for discharging sponge iron, the iron discharging vessel may be arranged in communication with an outlet of the direct reduction shaft. If the system comprises both an arrangement for charging iron ore and an arrangement for discharging sponge iron, the system may require only a single source of vacuum, a single source of seal gas and/or a single source of inert gas. That is to say that separate gas and/or vacuum sources are not required for the charging and discharging arrangements, and that these sources may be consolidated.

The source of make-up gas may be an electrolyser. The electrolyser may produce hydrogen by water electrolysis, or syngas (a mixture of carbon monoxide and hydrogen) by co-electrolysis of water and carbon dioxide. The make-up gas therefore may be hydrogen or syngas, such as bio-syngas. In this manner, it is possible to produce sponge iron without requiring the use of fossil fuels as the source of reducing gas.

Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig. 1: schematically illustrates an ore-based steelmaking value chain according to the Hybrit concept;
- Fig. 2: schematically illustrates an exemplifying embodiment of a system suitable for performing a process as disclosed herein;
- Fig. 3: is a flow chart schematically illustrating an exemplifying embodiment of a process for charging iron ore as disclosed herein; and
- Fig. 4: is a flow chart schematically illustrating an exemplifying embodiment of a process for discharging sponge iron as disclosed herein.

### DETAILED DESCRIPTION

The present invention is based upon an insight by the inventors that, when charging iron ore to a direct reduction shaft, removal of air from the charging vessel using vacuum followed by refilling with a selected seal gas provides a wide range of potential advantages. Lesser volumes of seal gas are required, since, in contrast with prior art methods that are based upon dilution of the atmosphere inside the charging vessel (corresponding to multiple "vessel volumes" of seal gas that needs to be flushed) until the atmosphere is sufficiently inert, the presently disclosed process first removes the air atmosphere and replaces it with the seal gas. Since lesser volumes of seal gas are required, and intermediate mixtures of seal gas and air are avoided, it is not necessary to limit the seal gas to gases that are inert (i.e. do not form flammable or explosive mixtures with air or process gas). Instead, potentially flammable non-oxidant gases such as hydrogen, methane, biogas or syngas may be used if desired. This means that accumulation of inert gases in the process gas may be avoided, and the need for bleeding of process gas may be decreased or avoided completely. The methane may be biomethane and/or the syngas may be bio-syngas. The carbon dioxide may be derived from a biological source, i.e. non-fossil CO2.

The same concept may be applied when discharging sponge iron from the direct reduction shaft, and the same or similar advantages are obtained.

The term process gas is used herein to denote the gas mixture in the direct reduction process, regardless of stage in the process. That is to say that process gas refers to gas that is introduced to, passes through, leaves, and is recycled back to the direct reduction shaft. More specific terms are used to denote the process gas at various points in the process, or to denote component gases added to the process gas to form part of the process gas.

Reducing gas is a gas introduced at a point lower than the inlet of the shaft, and which flows upwards counter to the moving bed of ore in order to reduce the ore and optionally carburize the sponge iron.

Top gas is partially spent process gas that is removed from an upper end of the shaft, in proximity to the ore inlet. After treatment, the top gas may be recycled back to the direct reduction shaft as a component of the reducing gas.

Make-up gas is fresh gas added to the process gas in order to maintain reducing ability. Typically, make-up gas is added to recycled top gas prior to re-introduction into the direct reduction shaft. Thus, the reducing gas typically comprises make-up gas together with recycled top gas. The make-up gas and recycled top gas may be mixed together prior to introduction into the direct reduction shaft, or may be introduced separately and mixed in the shaft.

Seal gas is gas entering the direct reduction shaft from the ore charging arrangement at the inlet of the direct reduction shaft. The outlet end of the direct reduction shaft may also be sealed using a seal gas, and seal gas therefore may enter the DR shaft from a discharging arrangement at the outlet of the direct reduction shaft. Variations of the present invention are therefore equally applicable using seal gas introduced during discharge of sponge iron from the direct reduction shaft. The seal gas used in prior art processes is typically inert, and inert seal gas may also be used in the process disclosed herein. However, in contrast to prior art processes, the seal gas in the process disclosed herein may instead be reducing and/or carburizing gas, and therefore may be considered as a complement to the make-up gas.

Inert gas is gas that does not form potentially flammable or explosive mixtures with either air or process gas, i.e. a gas that may not act as an oxidant or fuel in a combustion reaction under the conditions prevailing in the process. Although carbon dioxide is termed herein as an inert gas, it should be noted that it may be converted by reverse water-gas shift reaction to carbon monoxide and may thereafter partake in reducing and/or carburizing reactions. Therefore, although inert for the purpose of not forming flammable/explosive mixtures, it may still be consumed and not accumulate in the process gas under particular conditions.

### Charging of iron ore

The iron ore burden typically consists predominantly of iron ore pellets, although some lump iron ore may also be introduced. The iron ore pellets typically comprise mostly hematite, together with further additives or impurities such as gangue, fluxes and binders. However, the pellets may comprise some other metals and other ores such as magnetite. Iron ore pellets specified for direct reduction processes are commercially available, and such pellets may be used in the present process.

The ore charging vessel typically is a vessel comprising a sealable ore inlet, a sealable ore outlet, and at least one gas conduit suitable for the evacuation and/or introduction of gases. Naturally, the vessel may comprise multiple gas conduits, for example separate conduits for evacuation and introduction of gas, or multiple conduits for introduction of a variety of gases. The ore charging vessel is suitably constructed to be able to withstand the pressures to which it is subjected: both the sub-atmospheric pressure (c:a 100 mbar or less, preferably c:a 10 mbar or less) prevailing in the evacuation steps and the supra-atmospheric pressure ensuing due to refilling with seal gas (often greater than 2 bar, such as from about 2 bar to about 10 bar). A plurality of ore charging vessels may be arranged in parallel to supply ore to a single direct reductions shaft. For example, two, three, or four ore charging vessels may be arranged to supply a single direct reduction shaft with ore.

Prior to charging ore to the charging vessel, the ore outlet is set in a sealed state in order to be able to contain the ore to be introduced. By "set in a state" it is meant that a component is put into the relevant state if not already in such as state, or maintained in the state if already in such a state. Therefore, the term "set in a state" does not necessarily involve a change of state. Ore is charged to the vessel via the inlet, and the inlet is then sealed. A source of vacuum arranged in fluid connection with a gas conduit is then used to evacuate the atmosphere from the charging vessel. The source of vacuum may for example be a vacuum pump. Such pumps are known in the art. Preferably, the charging vessel and pump are configured such that the charging vessel may be brought to a pressure of pressure of about 100 mbar or less, preferably about 10 mbar or less, even more preferably about 1 mbar or less, at normal temperature (20 °C). Thus, substantially all air is evacuated from the charging vessel. If the vacuum achievable in the evacuation stage is sufficiently low, the charging vessel may subsequently be refilled with the seal gas to a charging pressure, i.e. the charging vessel pressure desired for introducing ore into the direct reduction shaft. The charging pressure may typically be a pressure in excess of the operating pressure of the direct reduction shaft, and may for example be a pressure of from about 2 bar to about 10 bar. If the vacuum achievable in the evacuation stage is not sufficiently low, undesired amounts of air may be retained in the charging vessel. In such a case, the charging vessel may initially be refilled with an inert gas, followed by a further evacuation step. In this manner, the amount of air remaining may be lowered to safe levels. The steps of evacuating and refilling with an inert gas may be performed as many times as required in order to ensure safety. In the final refilling step, the charging vessel is filled with the seal gas that will be introduced into the direct reduction shaft upon charging. Once filled with ore and seal gas, the ore outlet of the charging vessel is set in an open state in order to allow the mixture of ore and seal gas to be charged to the direct reduction shaft.

Once ore has been charged to the direct reduction shaft, the ore charging vessel should be reset to safely remove any process gases contained in the vessel and to prepare the vessel for a new charge of ore. This may be done by sealing the ore outlet, evacuating the charging vessel using vacuum in order to remove process gas, and then subsequently refilling the charging vessel with a suitable gas such as air, nitrogen, purified flue gas, or carbon dioxide. The process gases evacuated in this step may be recycled to the direct reduction shaft. The vessel is refilled to a pressure about atmospheric pressure. Alternatively, the vessel may simply be flushed with inert gas to remove process gas prior to opening, as per prior art methods. When the potentially flammable contents of the vessel have been evacuated and the vessel is once again at atmospheric pressure or thereabouts, the inlet of the vessel may be opened to allow a new charge of iron to be received.

### Direct Reduction

The direct reduction shaft may be of any kind commonly known in the art. By shaft, it is meant a solid-gas countercurrent moving bed reactor, whereby a burden of iron ore is charged at an inlet at the top of the reactor and descends by gravity towards an outlet arranged at the bottom of the reactor. Reducing gas is introduced at a lower point I the shaft than the ore inlet, and the reducing gas flows upward to reduce and optionally carburize the iron ore.

Reduction is typically performed at temperatures of from about 900 °C to about 1100 °C. The temperatures required are typically maintained by pre-heating of the process gases introduced into the reactor, for example using a preheater such as an electric preheater. Further heating of the gases may be obtained after leaving the pre-heater and prior to introduction into the reactor by exothermic partial oxidation of the gases with oxygen or air. Reduction may be performed at a pressure of from about 1 bar to about 10 bar in the DR shaft, preferably from about 3 bar to about 8 bar.

In conventional direct reduction processes, the make-up gas used to replenish the process gas is fossil-based and typically comprises syngas and natural gas in varying proportions. The present disclosure is applicable to processes utilizing such fossil-based make-up gas. However, preferably the make-up gas is not derived from fossil fuels in order to provide a fossil-free process for obtaining sponge iron.

The make-up gas may be composed mainly of hydrogen. For example, the make-up gas may comprise, consist essentially of, or consist of at least 80 vol%, preferably greater than 90 vol%, even more preferably greater than 95 vol% hydrogen gas (vol% determined at normal conditions of 1 atm and 0 °C). The disclosed process permits the production of essentially carbon-free sponge iron by using hydrogen as the make-up gas and not introducing carbonaceous gases into the process gas. However, in some cases it may be desirable to obtain a carburized sponge iron. Therefore, in order to achieve suitable levels of carburization of the sponge iron, some amounts of carburizing gas and/or carbon dioxide may be added as make-up gas. Carburizing gases are carbon-containing gases that are capable of directly carburizing the sponge iron, e.g. all non-fully oxidised carbon compounds, such as hydrocarbons or carbon monoxide. Such gases include, but are not limited to, methane, biogas, syngas, and mixtures thereof. However, a carburizing effect in the present process may alternatively or in addition be achieved by introduction of carbon dioxide. Under the prevailing carbon-lean conditions of the direct reduction shaft, the carbon dioxide may be converted to carbon monoxide and subsequently carburize the sponge iron. The methane may be biomethane and/or the syngas may be bio-syngas. The carbon dioxide may be derived from a biological source, i.e. non-fossil CO2.

Besides hydrogen, the balance of the make-up gas may therefore comprise, consist essentially of, or consist of carbon dioxide and/or carburizing gas. If carbon dioxide and/or carburizing gas constitute part of the make-up gas these may be introduced to the direct reduction shaft together with the hydrogen make-up gas. Alternatively, a proportion or all of the carbon dioxide and/or carburizing gas constituting part of the make-up gas may be added to the direct reduction shaft separately from the main volume of make-up gas. For example, a carburizing gas may be added to a carburizing or cooling zone of the direct reduction shaft.

The process gas may be at least partially recycled, whereby top (spent) gas from the DR shaft may be cleaned and treated to remove by-products such as water and/or dust prior to re-introduction to the DR shaft. This recycled top gas may be mixed with fresh make-up gas prior to reintroduction into the reactor, or may be introduced separately from any fresh make-up gas supply.

Seal gas introduced together with the iron ore burden also forms a component part of the process gas. As previously described, the seal gas may be an inert gas such as nitrogen or purified flue gas. In such a case, it may be necessary to continually remove a proportion of the process gas from the process cycle in order to maintain balance in the process gas and prevent accumulation of inert components. This is otherwise known as bleeding the process gas. The process gas bled off from the process cycle may for example be combusted in order to provide process heating, e.g. in conjunction with pre-heating.

Alternatively, the seal gas may comprise, consist essentially of, or consist of a non-oxidant gas that fulfils a purpose in the process, such as the gases described as potential make-up gases above. These include hydrogen, methane, biogas, -syngas, carbon dioxide, and combinations thereof. The methane may be biomethane, and/or the syngas may be bio-syngas, and/or the carbon dioxide may be bio-CO2. In such a case, no inert gas is added to the process gas and bleeding of the process gas may therefore be avoided. The need for production of inert gas as seal gas is also deceased, and capital equipment such as an air separation unit may be downsized or avoided completely.

Sponge iron is obtained as the product of reduction of the iron ore, and is discharged from the outlet at the bottom end of the direct reduction shaft. The shaft may have a cooling and discharge cone arranged at the bottom to allow the sponge iron to cool prior to discharge from the outlet.

### Discharging sponge iron

Discharging sponge iron from the direct reduction shaft has similar requirements as to charging iron ore to the shaft. It is essential when discharging that no combustible/explosive gas mixtures are formed, and it is preferable to avoid introduction of inert gases into the process gas insofar as possible. Therefore, the principles of the present invention may also be applied to a sponge iron discharging apparatus and process.

The iron discharging vessel typically is a vessel comprising a sealable iron inlet, a sealable iron outlet, and at least one gas conduit suitable for the evacuation and/or introduction of gases. Naturally, the vessel may comprise multiple gas conduits, for example separate conduits for evacuation and introduction of gas, or multiple conduits for introduction of a variety of gases. The iron discharging vessel is suitably constructed to be able to withstand the pressures to which it is subjected: both the sub-atmospheric pressure (c:a 100 mbar or less, preferably c:a 10 mbar or less) prevailing in the evacuation steps and the supra-atmospheric pressure ensuing due to refilling with seal gas (often greater than 2 bar, such as from about 2 bar to about 10 bar). A plurality of iron discharging vessels may be arranged in parallel to receive iron from a single direct reductions shaft. For example, two, three, or four ore discharging vessels may be arranged to discharge the iron from a single direct reduction shaft.

Prior to discharging iron to the discharging vessel, the iron inlet and outlet are set in a sealed state. A source of vacuum arranged in fluid connection with a gas conduit is used to evacuate the atmosphere from the discharging vessel. The source of vacuum may for example be a vacuum pump. Such pumps are known in the art. Preferably, the discharging vessel and pump are configured such that the discharging vessel may be brought to a pressure of pressure of about 100 mbar or less, preferably about 10 mbar or less, even more preferably about 1 mbar or less, at normal temperature (20 °C). Thus, substantially all air is evacuated from the discharging vessel. If the vacuum achievable in the evacuation stage is sufficiently low, the discharging vessel may subsequently be refilled with the seal gas to a discharging pressure, i.e. the discharging vessel pressure desired for receiving sponge iron from the direct reduction shaft. The discharging pressure may typically be a pressure equal to or in excess of the operating pressure of the direct reduction shaft, and may for example be a pressure of from about 2 bar to about 10 bar. If the vacuum achievable in the evacuation stage is not sufficiently low, undesired amounts of air may be retained in the discharging vessel. In such a case, the discharging vessel may initially be refilled with an inert gas, followed by a further evacuation step. In this manner, the amount of air remaining may be lowered to safe levels. The steps of evacuating and refilling with an inert gas may be performed as many times as required in order to ensure safety. In the final refilling step, the discharging vessel is filled with the seal gas that will be introduced into the direct reduction shaft upon discharging or sponge iron. Once a suitable atmosphere is established inside of the discharging vessel, the iron inlet may be opened to allow sponge iron to be received in the vessel from the direct reduction shaft. Once loaded with sponge iron, the inlet of the discharging vessel may be closed. The closed vessel then comprises a mixture of hot sponge iron and process gases. Preferably, the gaseous contents of the vessel should once again be removed by application of vacuum and replaced with an inert gas at a suitable pressure before opening the outlet of the discharging vessel to release the contained sponge iron. The process gases evacuated in this step may be recycled to the direct reduction shaft.

### Sponge iron

The term crude iron is used herein to denote all irons produced for further processing to steel, regardless of whether they are obtained from a blast furnace (i.e. pig iron), or, as in the disclosed process, a direct reduction shaft (i.e. sponge iron). The sponge iron obtained at the outlet of the DR shaft is typically predominantly in the form of pellets, due to the structural integrity of the direct reduction pellets, as well as the conditions prevailing in the DR shaft. Such sponge iron is typically referred to as direct reduced iron (DRI). Depending on the process parameters, it may be provided as hot (HDRI) or cold (CDRI). Cold DRI may also be known as Type (B) DRI. DRI may be prone to re-oxidation and in some cases is pyrophoric. However, there are a number of known means of passivating the DRI. One such passivating means commonly used to facilitate overseas transport of the product is to press the hot DRI into briquettes. Such briquettes are commonly termed hot briquetted iron (HBI), and may also be known as type (A) DRI.

The sponge iron product obtained by the process herein may be an essentially fully metallized sponge iron, i.e. a sponge iron having a degree of reduction (DoR) greater than about 90%, such as greater than about 94% or greater than about 96%. Degree of reduction is defined as the amount of oxygen removed from the iron oxide, expressed as a percentage of the initial amount of oxygen present in the iron oxide. It is often not commercially favourable to obtain sponge irons having a DoR greater than about 96% due to reaction kinetics, although such sponge irons may be produced if desired.

As described above, the process described herein is suitable for producing either carbon-free or carburized sponge iron, as desired. By carburized sponge iron it is meant carbon-containing sponge iron. The carbon present in the sponge iron product may typically be in the form of cementite (Fe3C) and/or graphite. Graphite tends to dust and to be lost from the sponge iron prior to reaching the melt of the EAF. For this reason, it may be preferable if carbon is present in the sponge iron as cementite.

The carburized sponge iron may comprise from 0.1 to 5 percent carbon by weight, such as from 0.5 to 3 percent carbon by weight such as about 1 to 2 percent carbon by weight. It is typically desirable for further processing that the sponge iron has a carbon content of from 0.5 to 5 percent carbon by weight, preferably from 1 to 4 percent by weight, such as about 3 percent by weight, although this may depend on the ratio of sponge iron to scrap used in a subsequent EAF processing step. If desired, the carburized sponge iron product of the present process may subsequently be further carburized by other means prior to further processing.

### Gases

Hydrogen gas may preferably be obtained at least in part by electrolysis of water. If the water electrolysis is performed using renewable energy then this allows the provision of a reducing gas from renewable sources. The electrolytic hydrogen may be conveyed by a conduit directly from the electrolyser to the DR shaft, or the hydrogen may be stored upon production and conveyed to the DR shaft as required.

If carbon dioxide is used in the process described herein, either as seal gas, make-up gas, or inert gas, is preferable that the source of carbon dioxide is essentially pure carbon dioxide, e.g. 95 vol% carbon dioxide or greater, preferably 98 vol% or greater. The source of carbon dioxide may preferably be from a high-concentration source, preferably a high-concentration biogenic source. For example, concentrated "green" CO2 may be obtained as a by-product of bio-gas production by anaerobic digestion, or as a by-product of bioethanol production. If the carbon dioxide used in the process is from a renewable source then the process may be net negative with regard to CO2 emissions. However, even use of a source of carbon dioxide from a fossil source that otherwise would have been directly emitted means that the process may not result in any excess emission of CO2. An alternative means of providing carbon dioxide is to preheat the reducing gas prior to introduction into the direct reduction shaft using oxy-fuel combustion of biomass. The principle of oxy-fuel combustion is simple: the biomass is combusted using essentially pure oxygen as the oxidant. The resulting flue stream consists essentially of carbon dioxide and steam. The steam may be removed by simple condensation, providing an essentially pure source of carbon dioxide. Conventionally, the provision of essentially pure oxygen is an economic impediment to the utilization of oxy-fuel combustion. However, in the present case there may be a ready supply of oxygen available at low additional cost from water electrolysis, making oxy-fuel preheating of the reduction gas economically feasible.

A carburizing gas may be used as seal gas and/or make-up gas. The carburizing gas may be any gas known or expected in the art to provide carburization. Gas in this respect refers to a substance that is gaseous at the high temperatures prevailing in the carburization reactor, although it may be liquid or solid at room temperature. Suitable carburizing gases include hydrocarbons such as methane, natural gas, LPG or petroleum, or other carbonaceous substances such as syngas, lower (C1-C6) alcohols, esters and ethers. The carburizing gas may be of fossil origin, but it is preferable that it is obtained partly or wholly from a renewable source in order to reduce net CO2 emissions. By renewable it is meant a resource that is naturally replenished on a human timescale. The high utilization of carbon present in the carburizing gas permits use of renewable carburizing gases, despite their relative scarcity and high cost as compared to fossil equivalents. Suitable renewable carburizing gases include biomethane, biogas, gas obtained from the pyrolysis or partial combustion of biomass (e.g. bio-syngas), lower alcohols or ethers such as methanol, DME or ethanol derived from renewable feedstocks, or combinations thereof. Sulfur-containing carburizing gases may be used, as the sulfur is known to prevent nucleation of graphite and passivate the sponge iron product.

The composition of the carburizing gas may be chosen to suit the final carburized sponge iron to be obtained. The carburization reaction with hydrocarbons is relatively endothermic, leading to a relatively cool final product, whereas the reaction with CO-containing carburizing gases is more exothermic, leading to a hotter final product. This effect may be utilized to tailor the temperature of the final product obtained. For example, if a hot product is desired for briquetting (HBI), a gas comprising some partially oxidized carbon (e.g. in the form of CO, ketones, aldehydes) may be used, whereas if cold sponge iron (CDRI) is desired then biomethane may be used.

In considering the total quantities of carbon dioxide and/or auxiliary carburizing gas suitable to be added to the process gas, either as seal gas or in the make-up gas, factors to consider are the degree of carburization desired, the effect on the added carbon on the water-gas shift equilibrium, and the effect the added carbon has on the reducing capacity of the reducing gas. For example, excessive addition of carbon may result in significant accumulation of carbon dioxide in the process gas, potentially decreasing the reducing capacity of the reducing gas and leading to a requirement to bleed the process gas.

Inert gases such as nitrogen or purified flue gas may be used as seal gas. Nitrogen may be obtained for example by cryogenic distillation of air using an air separator unit (ASU). By purified flue gas, it is meant flue gas that has been treated to ensure that it is suitable for use as a sufficiently inert seal gas. Such treatment may include post-combustion to remove excess oxygen, and/or drying of the flue gas.

### Embodiments

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features.

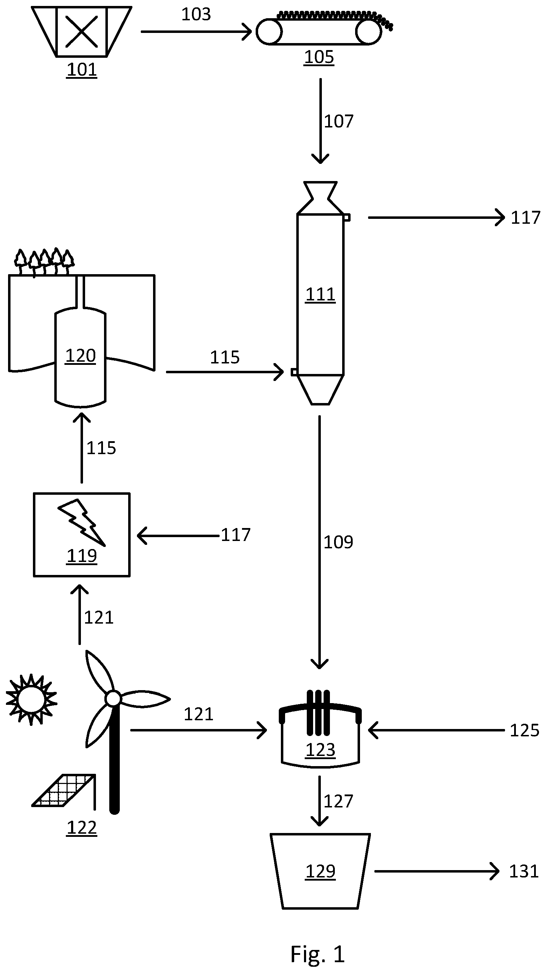

Figure 1 schematically illustrates a prior art embodiment of the ore-based steelmaking value chain according to the Hybrit concept. The ore-based steelmaking value chain starts at the iron ore mine 101. After mining, iron ore 103 is concentrated and processed in a pelletizing plant 105, and iron ore pellets 107 are produced. These pellets, together with any lump ore used in the process, are converted to sponge iron 109 by reduction in a direct reduction shaft 111 using hydrogen gas 115 as the main reductant and producing water 117 as the main by-product. The hydrogen gas 115 is produced by electrolysis of water 117 in an electrolyser 119 using electricity 121 that is preferably primarily derived from fossil-free or renewable sources 122. The hydrogen gas 115 may be stored in a hydrogen storage 120 prior to introduction into the direct reduction shaft 111. The sponge iron 109 is melted using an electric arc furnace 123, optionally together with a proportion of scrap iron 125 or other iron source, to provide a melt 127. The melt 127 is subjected to further downstream secondary metallurgical processes 129, and steel 131 is produced. It is intended that the entire value-chain, from ore to steel may be fossil-free and produce only low or zero carbon emissions.

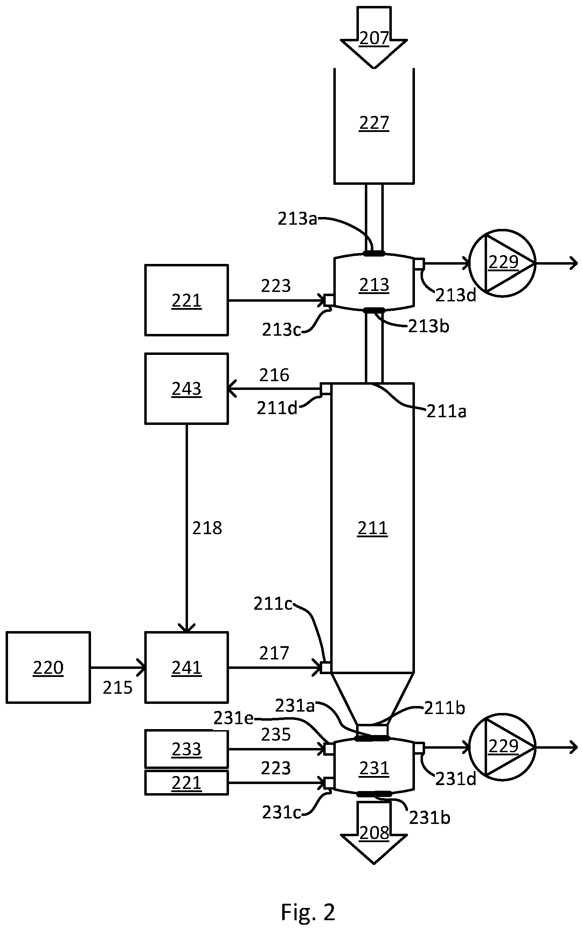

Figure 2 schematically illustrates an exemplifying embodiment of a system suitable for performing the process as disclosed herein.

A direct reduction shaft 211 is arranged with an inlet 211a for iron ore 207, an outlet 211b for discharging sponge iron 208, an inlet for reducing gas 211c and an outlet for top gas 211d. A charging vessel 213 is arranged in communication with the inlet 211a to the direct reduction shaft 211. A discharging vessel 231 is arranged in communication with the outlet 211b of the direct reduction shaft 211.

The charging vessel 213 comprises an inlet 213a for iron ore 207, an outlet 213b for iron ore 207, a gas inlet 213c and a gas outlet 213d. The inlet 213a of the charging vessel 213 is arranged in connection with an ore bin 227. The gas inlet 213c of the charging vessel 213 is arranged in connection with a source 221 of seal gas 223, and the gas outlet 213d is arranged in connection with a vacuum pump 229.

The discharging vessel 231 comprises an inlet 231a for sponge iron 208, an outlet 231b for sponge iron 208, a first gas inlet 231c, a second gas inlet 231e, and a gas outlet 231d. The inlet 231a of the discharging vessel 231 is arranged in connection with the outlet 211b of the direct reduction shaft 211. The first gas inlet 231c of the charging vessel 231 is arranged in connection with a source 221 of seal gas 223. The second gas inlet 231e of the charging vessel 231 is arranged in connection with a source 233 of seal gas 235. The gas outlet 231d is arranged in connection with a vacuum pump 229.

Initially, ore inlet 213a of the charging vessel 213 is open, and ore outlet 213b, gas inlet 213c, and gas outlet 213d are closed. Iron ore 207 from ore bin 227 is introduced into the charging vessel 213. Once loaded with ore, the ore inlet 213a is sealed, gas outlet 213d is opened, and the charging vessel 213 is evacuated of air using vacuum pump 229, decreasing the pressure in the charging vessel 213 to about 100 mbar or less. Once the target pressure is reached, the gas outlet 213d is closed, the gas inlet 213c is opened, and the charging vessel 213 is pressurized with seal gas 223 to a pressure approximating the operating pressure of the direct reduction shaft 211. Once pressurized, gas inlet 213c is closed and the ore outlet 213b of the charging vessel 213 is opened to allow iron ore 207 to be charged to the inlet 211a of the direct reduction shaft 211. Seal gas 223 is inevitably concomitantly introduced to the direct reduction shaft in the charging operation. The iron ore 207 charged to the direct reduction shaft 211 progressively passes through the shaft to be discharged at outlet 211b. During its passage through the shaft 211 the ore 207 is reduced by reducing gas 217 in a counter-current flow, such that sponge iron 208 is obtained at the discharge outlet 211b of the reactor 211.

Prior to discharging the sponge iron 208, the discharging vessel 231 is first sealed at its inlet 231a and 231b, evacuated using vacuum pump 229, and re-filled with seal gas 223. The vessel 231 is then ready to receive sponge iron 208. The inlet 231a of the vessel is opened, allowing sponge iron 208 to fall into the vessel, and displacing the seal gas in the vessel upwards into the direct reduction shaft 211. The inlet 231a of the discharging vessel is then closed, the discharging vessel 231 is evacuated using vacuum pump 229, and refilled to atmospheric pressure using inert gas 235. The outlet 231b of the discharging vessel 231 may then be opened to release sponge iron 208.

Make-up gas 215 is supplied from a source of make-up gas 220, such as a hydrogen gas store or water electrolyser. The make-up gas 215 is mixed with treated top gas 218 to form reducing gas 217. The reducing gas 217 is passed through a pre-heater 241 prior to introduction into the direct reduction shaft 211. The top gas 216 exiting outlet 211d is passed through a plurality of treatment apparatuses 243 in order to prepare the gas for re-introduction to the DR shaft 211. The plurality of treatment apparatuses may include a cleaning step, such as passage through an electrostatic precipitator to remove solids from the gas, heat exchange with other process gases such as the reducing gas 217, and separation of water. The treated top gas 218 is mixed with the make-up gas 215 and passed through the pre-heater 241 prior to reintroduction into the direct reduction shaft 211 through inlet 211c. The temperature of the gases entering inlet 211c may be further increased by partial oxidation. In such a case, a supply of oxygen (not shown) may be arranged between the pre-heater 241 and inlet 211c.

Once ore is discharged from the charging vessel 213, the vessel may be prepared for a new charge of ore. First, the ore outlet 213b is closed. Subsequently, gas outlet 213d is opened and process gases are evacuated from the charging vessel 213 using vacuum pump 229. The gas outlet 213d is then closed, and the charging vessel is refiled with a gas to ambient pressure. In the illustrated example, the vessel 213 is refilled with seal gas 223 by opening gas inlet 213c, but it may instead be filled from a source of inert gas (not illustrated) if the seal gas is not inert. Finally, the gas inlet 213c is closed, and the ore inlet 213a is opened. In such a manner, the charging vessel 213 is reinstated to its initial configuration and is ready for receiving a further charge of iron ore.

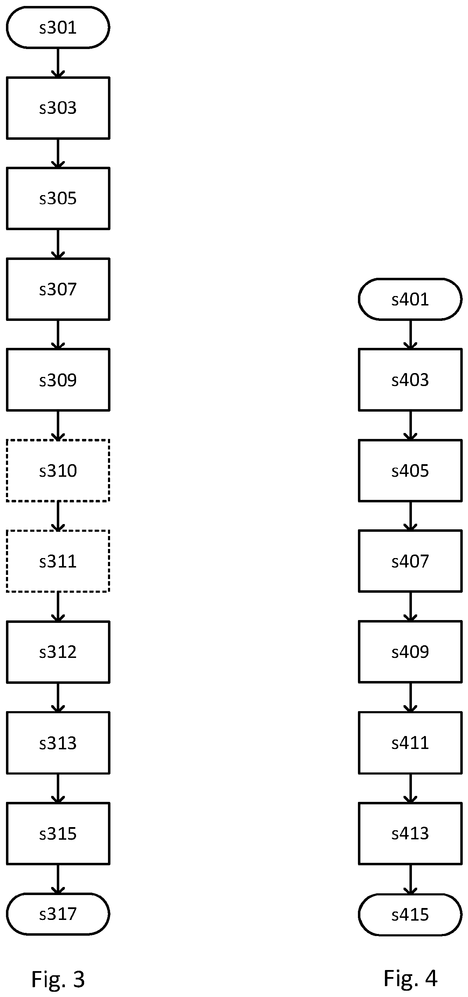

Figure 3 is a flow chart schematically illustrating an exemplifying embodiment of the process for charging iron ore to a direct reduction shaft as disclosed herein. Step s301 denotes the start of the process. In step s303 ore outlet 213b of ore charging vessel 213 is set in a sealed state. In step s305 an ore inlet 213a of the ore charging vessel 213 is set in an open state. Note that if the ore outlet 213b and ore inlet 213a are already in a closed and open state respectively, then these steps do not involve any change in state of the charging arrangement. In step s307 the ore charging vessel 213 is charged with iron ore 207 via the ore inlet 213a. In step s309 the ore inlet 213a is set in a sealed state. In step s312, gas is evacuated from the ore charging vessel 213 by application of vacuum. In step s313, the ore charging vessel is refilled with a seal gas 223. In step s315, the ore outlet 213b is set in an open state to charge iron ore 207 to the direct reduction shaft 211. Step s317 denotes the end of the process.

The listed steps are preformed sequentially, but there may be intervening steps. For example, if for some reason the vacuum applicable to the charging vessel is not sufficient to remove substantially all air, e.g. if the charge vessel does not tolerate such low pressures, one or more extra evacuation/refill cycles may be performed between steps s309 and s312. One such evacuation/refill cycle is illustrated in Figure 3. This involves a step s310 of evacuating gas from the ore charging vessel 213 by application of vacuum, and a step s311 of refilling the ore charging vessel with an inert gas.

Figure 4 is a flow chart schematically illustrating an exemplifying embodiment of the process for discharging iron ore from a direct reduction shaft as disclosed herein. Step s401 denotes the start of the process. In step s403 the iron outlet 231a and the iron inlet 231b of the iron discharging vessel 231 are set in a sealed state. Note that if the outlet 231b and inlet 231a are already in a closed state, then these steps do not involve any change in state of the discharging arrangement. In step s405 gas is evacuated from the iron discharging vessel 231 by application of vacuum. In step s407, the iron charging vessel 231 is refilled with a seal gas 223. In step s409, the iron inlet 231a of the iron discharging vessel 231 is set in an open state. In step s409, the iron discharging vessel 231 is charged with sponge iron 208 via the iron inlet 231a. In step s411, the iron inlet is set in a sealed state. In this manner, sponge iron 208 is discharged from the direct reduction shaft 211. Via a number of optional intermediate steps (not shown) the discharging vessel is prepared for release of the sponge iron 208. In a final step, s 413, the iron outlet 231b is opened and the sponge iron 208 is released. Step s415 denotes the end of the process. The listed steps are preformed sequentially, but there may be intervening steps. For example, if for some reason the vacuum applicable to the discharging vessel is not sufficient to remove substantially all air, e.g. if the discharge vessel does not tolerate such low pressures, one or more extra evacuation/refill cycles may be performed between steps s403 and s405 (not shown).

## Claims

1. An arrangement for charging iron ore (207) to a direct reduction shaft (211), the arrangement comprising:
- an ore charging vessel (213);
- a source of vacuum (229); and
- a source of a seal gas (221);
wherein the source of vacuum and the source of the seal gas are each arranged in controllable fluid connection with the ore charging vessel; and
wherein the seal gas is a non-oxidant gas.

2. The arrangement according to claim 1, wherein the ore charging vessel comprises a sealable ore inlet (213a), a sealable ore outlet (213b), and at least one gas conduit (213c, 231d), wherein the source of vacuum and/or the source of the seal gas are arranged in fluid connection with the gas conduit.

3. The arrangement according to any one of the preceding claims, wherein the seal gas is selected from the list consisting of hydrogen, methane, biogas, syngas, carbon dioxide, nitrogen, purified flue gas, and combinations thereof.

4. The arrangement according to any one of the preceding claims, further comprising a source of an inert gas, wherein the source of the inert gas is arranged in controllable fluid connection with the iron ore charging arrangement, and wherein the inert gas is different from the seal gas.

5. The arrangement according to claim 4, wherein the inert gas is selected from the list consisting of carbon dioxide, nitrogen, purified flue gas, and combinations thereof; and wherein the seal gas is selected from the list consisting of hydrogen, methane, biogas, syngas, carbon dioxide, and combinations thereof.

6. The arrangement according to any one of the preceding claims, configured to attain a pressure of about 100 mbar or less at normal temperature, preferably about 10 mbar or less, even more preferably about 1 mbar or less.

7. An arrangement for discharging sponge iron from a direct reduction shaft, the arrangement comprising:
- a sponge iron discharging vessel (231);
- a source of vacuum (229); and
- a source of a seal gas (221);
wherein the source of vacuum and the source of the seal gas are each arranged in controllable fluid connection with the iron discharging vessel; and
wherein the seal gas is a non-oxidant gas.

8. A system for the production of sponge iron, the system comprising:
- an arrangement for charging iron ore according to any one of claims 1-6, and/or an arrangement for discharging sponge iron according to claim 7;
- a direct reduction shaft (211); and
- a source of a make-up gas (220) arranged in fluid connection with the direct reduction shaft.

9. The system according to claim 8, wherein the source of make-up gas is an electrolyser and the make-up gas is hydrogen.

10. A process for charging iron ore to a direct reduction shaft, the process comprising the steps:
a) setting (s303) an ore outlet of an ore charging vessel in a sealed state;
b) setting (s305) an ore inlet of the ore charging vessel in an open state;
c) charging (s307) the ore charging vessel with iron ore via the ore inlet;
d) setting (s309) the ore inlet in a sealed state;
e) evacuating (s312) gas from the ore charging vessel by application of vacuum;
f) refilling (s313) the ore charging vessel with a seal gas; and
g) setting (s315) the ore outlet in an open state to charge iron ore to the direct reduction shaft;
wherein the seal gas is a non-oxidant gas.

11. The process according to claim 10, wherein the seal gas is selected from the list consisting of hydrogen, methane, biogas, syngas, carbon dioxide, nitrogen, purified flue gas, and combinations thereof.

12. The process according to any one of claims 10-11, further comprising the steps:
e0) removing (s310) gas from the ore charging vessel by application of vacuum; and
f0) refilling (s311) the ore charging vessel with an inert gas;
wherein steps e0) and f0) are performed after step d) but prior to step e).

13. The process according to claim 12, wherein the inert gas is selected from the list consisting of carbon dioxide, nitrogen, purified flue gas, and combinations thereof.

14. The process according to any one of claims 12-13, wherein the wherein seal gas and inert gas are the same.

15. The process according to any one of claims 12-13,
wherein seal gas and inert gas are different; and
wherein the seal gas is selected from the list consisting of hydrogen, methane, biogas, syngas, carbon dioxide, and combinations thereof.

16. The process according to any one of claims 10-15, further comprising the steps:
h) setting the ore outlet in a sealed state;
i) removing a process gas from the ore charging vessel by application of vacuum;
j) refilling the ore charging vessel with a gas selected from air, inert gas, and combinations thereof; and
k) setting the ore inlet in an open state.

17. A process for discharging sponge iron from a direct reduction shaft, the process comprising the steps:
i) setting (s403) an iron outlet and an iron inlet of an iron discharging vessel in a sealed state;
ii) evacuating (s405) gas from the iron discharging vessel by application of vacuum;
iii) refilling (s407) the iron charging vessel with a seal gas;
iv) setting (s409) an iron inlet of the iron discharging vessel in an open state;
v) charging (s411) the iron discharging vessel with sponge iron via the iron inlet; and
vi) setting (s411) the iron inlet in a sealed state;
wherein the seal gas is a non-oxidant gas.

18. A process for direct reduction of iron ore, wherein the process comprises introducing a seal gas consisting essentially of a gas selected from
hydrogen,
methane,
biogas,
syngas,
combinations of carbon dioxide with hydrogen, methane, biogas, or bio-syngas,
and combinations thereof to a direct reduction shaft in conjunction with charging the iron ore to the direct reduction shaft and/or in conjunction with discharging a sponge iron from the direct reduction shaft, wherein the seal gas is introduced by a process for charging iron ore according to any one of claims 10-16, and/or by a process for discharging sponge iron according to claim 17.

## Patentansprüche

1. Anordnung zum Beschicken von Eisenerz (207) in einen Direktreduktionsschacht (211), wobei die Anordnung Folgendes umfasst:
- einen Erzbeschickungsbehälter (213);
- eine Quelle von Vakuum (229); und
- eine Quelle eines Sperrgases (221);
wobei die Quelle von Vakuum und die Quelle des Sperrgases jeweils in kontrollierbarer Fluidverbindung mit dem Erzbeschickungsbehälter angeordnet sind; und
wobei das Sperrgas ein nicht oxidierendes Gas ist.

2. Anordnung nach Anspruch 1, wobei der Erzbeschickungsbehälter einen abdichtbaren Erzeinlass (213a), einen abdichtbaren Erzauslass (213b) und mindestens eine Gasleitung (213c, 231d) umfasst, wobei die Quelle von Vakuum und/oder die Quelle des Sperrgases in Fluidverbindung mit der Gasleitung angeordnet sind.

3. Anordnung nach einem der vorhergehenden Ansprüche, wobei das Sperrgas ausgewählt ist aus der Liste bestehend aus Wasserstoff, Methan, Biogas, Syngas, Kohlenstoffdioxid, Stickstoff, gereinigtem Rauchgas und Kombinationen davon.

4. Anordnung nach einem der vorhergehenden Ansprüche, ferner umfassend eine Quelle eines Inertgases, wobei die Quelle des Inertgases in kontrollierbarer Fluidverbindung mit der Eisenerzbeschickungsanordnung angeordnet ist und wobei sich das Inertgas von dem Sperrgas unterscheidet.

5. Anordnung nach Anspruch 4, wobei das Inertgas ausgewählt ist aus der Liste bestehend aus Kohlenstoffdioxid, Stickstoff, gereinigtem Rauchgas und Kombinationen davon; und wobei das Sperrgas ausgewählt ist aus der Liste bestehend aus Wasserstoff, Methan, Biogas, Syngas, Kohlenstoffdioxid und Kombinationen davon.

6. Anordnung nach einem der vorhergehenden Ansprüche, die dazu konfiguriert ist, einen Druck von etwa 100 mbar oder weniger bei normaler Temperatur, vorzugsweise etwa 10 mbar oder weniger, noch weiter bevorzugt etwa 1 mbar oder weniger zu halten.

7. Anordnung zum Ausspeisen von Eisenschwamm aus einem Direktreduktionsschacht, wobei die Anordnung Folgendes umfasst:
- einen Eisenschwammausspeisebehälter (231);
- eine Quelle von Vakuum (229); und
- eine Quelle eines Sperrgases (221);
wobei die Quelle von Vakuum und die Quelle des Sperrgases jeweils in kontrollierbarer Fluidverbindung mit dem Eisenausspeisebehälter angeordnet sind; und
wobei das Sperrgas ein nicht oxidierendes Gas ist.

8. System zur Herstellung von Eisenschwamm, wobei das System Folgendes umfasst:
- eine Anordnung zum Beschicken von Eisenerz nach einem der Ansprüche 1-6 und/oder eine Anordnung zum Ausspeisen von Eisenschwamm nach Anspruch 7;
- einen Direktreduktionsschacht (211); und
- eine Quelle eines Frischgases (220), die in Fluidverbindung mit dem Direktreduktionsschacht angeordnet ist.

9. System nach Anspruch 8, wobei die Quelle von Frischgas ein Elektrolyseur ist und das Frischgas Wasserstoff ist.

10. Prozess zum Beschicken von Eisenerz in einen Direktreduktionsschacht, wobei der Prozess die folgenden Schritte umfasst:
a) Versetzen (s303) eines Erzauslasses eines Erzbeschickungsbehälters in einen abgedichteten Zustand;
b) Versetzen (s305) eines Erzeinlasses des Erzbeschickungsbehälters in einen offenen Zustand;
c) Beschicken (s307) des Erzbeschickungsbehälters mit Eisenerz über den Erzeinlass;
d) Versetzen (s309) des Erzeinlasses in einen abgedichteten Zustand;
e) Entleeren (s312) von Gas aus dem Erzbeschickungsbehälter durch Anlegen von Vakuum;
f) Nachfüllen (s313) des Erzbeschickungsbehälters mit einem Sperrgas; und
g) Versetzen (s315) des Erzauslasses in einen offenen Zustand, um Eisenerz in den Direktreduktionsschacht zu beschicken; wobei das Sperrgas ein nicht oxidierendes Gas ist.

11. Prozess nach Anspruch 10, wobei das Sperrgas ausgewählt ist aus der Liste bestehend aus Wasserstoff, Methan, Biogas, Syngas, Kohlenstoffdioxid, Stickstoff, gereinigtem Rauchgas und Kombinationen davon.

12. Prozess nach einem der Ansprüche 10-11, ferner umfassend die folgenden Schritte:
e0) Entfernen (s310) von Gas aus dem Erzbeschickungsbehälter durch Anlegen von Vakuum; und
f0) Nachfüllen (s311) des Erzbeschickungsbehälters mit einem Inertgas;
wobei die Schritte e0) und f0) nach Schritt d), aber vor Schritt e) durchgeführt werden.

13. Prozess nach Anspruch 12, wobei das Inertgas ausgewählt ist aus der Liste bestehend aus Kohlenstoffdioxid, Stickstoff, gereinigtem Rauchgas und Kombinationen davon.

14. Prozess nach einem der Ansprüche 12-13, wobei das Sperrgas und das Inertgas gleich sind.

15. Prozess nach einem der Ansprüche 12-13, wobei das Sperrgas und das Inertgas unterschiedlich sind; und wobei das Sperrgas ausgewählt ist aus der Liste bestehend aus Wasserstoff, Methan, Biogas, Syngas, Kohlenstoffdioxid und Kombinationen davon.

16. Prozess nach einem der Ansprüche 10-15, ferner umfassend die folgenden Schritte:
h) Versetzen des Erzauslasses in einen abgedichteten Zustand;
i) Entfernen eines Prozessgases aus dem Erzbeschickungsbehälter durch Anlegen von Vakuum;
j) Nachfüllen des Erzbeschickungsbehälters mit einem Gas, das ausgewählt ist aus Luft, Inertgas und Kombinationen davon; und
k) Versetzen des Erzeinlasses in einen offenen Zustand.

17. Prozess zum Ausspeisen von Eisenschwamm aus einer Direktreduktionswelle, wobei der Prozess die folgenden Schritte umfasst:
i) Versetzen (s403) eines Eisenauslasses und eines Eiseneinlasses eines Eisenausspeisebehälters in einen abgedichteten Zustand;
ii) Entleeren (s405) von Gas aus dem Eisenausspeisebehälter durch Anlegen von Vakuum;
iii) Nachfüllen (s407) des Eisenbeschickungsbehälters mit einem Sperrgas;
iv) Versetzen (s409) eines Eiseneinlasses des Eisenausspeisebehälters in einen offenen Zustand;
v) Beschicken (s411) des Eisenausspeisebehälters mit Eisenschwamm über den Eiseneinlass; und
vi) Versetzen (s411) des Eiseneinlasses in einen abgedichteten Zustand;
wobei das Sperrgas ein nicht oxidierendes Gas ist.

18. Prozess zur Direktreduktion von Eisenerz, wobei der Prozess Einführen eines Sperrgases, das im Wesentlichen aus einem Gas besteht, das ausgewählt ist aus
Wasserstoff,
Methan,
Biogas,
Syngas,
Kombinationen aus Kohlenstoffdioxid und Wasserstoff, Methan, Biogas oder Bio-Syngas, und Kombinationen davon in einen Direktreduktionsschacht in Verbindung mit dem Beschicken des Eisenerzes in den Direktreduktionsschacht und/oder in Verbindung mit dem Ausspeisen eines Eisenschwamms aus dem Direktreduktionsschacht, wobei das Sperrgas durch einen Prozess zum Beschicken von Eisenerz nach einem der Ansprüche 10-16 und/oder durch einen Prozess zum Ausspeisen von Eisenschwamm nach Anspruch 17 eingeführt wird.

## Revendications

1. Agencement de chargement de minerai de fer (207) dans un arbre de réduction directe (211), l'agencement comprenant :
- un récipient de chargement de minerai (213) ;
- une source de vide (229) ; et
- une source de gaz d'étanchéité (221) ;
dans lequel la source de vide et la source de gaz d'étanchéité sont chacune disposées en connexion fluidique contrôlable avec le récipient de chargement du minerai ; et
dans lequel le gaz d'étanchéité est un gaz non oxydant.

2. Agencement selon la revendication 1, dans lequel le récipient de chargement de minerai comprend une entrée de minerai scellable (213a), une sortie de minerai scellable (213b) et au moins un conduit de gaz (213c, 231d), dans lequel la source de vide et/ou la source du gaz d'étanchéité sont disposées en connexion fluidique avec le conduit de gaz.

3. Agencement selon l'une quelconque des revendications précédentes, dans lequel le gaz d'étanchéité est choisi dans la liste constituée par l'hydrogène, le méthane, le biogaz, le gaz de synthèse, le dioxyde de carbone, l'azote, le gaz de combustion purifié et leurs combinaisons.

4. Agencement selon l'une quelconque des revendications précédentes, comprenant en outre une source d'un gaz inerte, dans lequel la source du gaz inerte est disposée en connexion fluidique contrôlable avec l'agencement de chargement de minerai de fer, et dans lequel le gaz inerte est différent du gaz d'étanchéité.

5. Agencement selon la revendication 4, dans lequel le gaz inerte est choisi dans la liste constituée par le dioxyde de carbone, l'azote, le gaz de combustion purifié et leurs combinaisons ; et dans lequel le gaz d'étanchéité est choisi dans la liste constituée par l'hydrogène, le méthane, le biogaz, le gaz de synthèse, le dioxyde de carbone et leurs combinaisons.

6. Agencement selon l'une quelconque des revendications précédentes, configuré pour atteindre une pression d'environ 100 mbar ou moins à température normale, de préférence d'environ 10 mbar ou moins, encore plus préférablement d'environ 1 mbar ou moins.

7. Agencement de déchargement d'éponge de fer à partir d'un arbre de réduction directe, l'agencement comprenant :
- un récipient de déchargement d'éponge de fer (231) ;
- une source de vide (229) ; et
- une source de gaz d'étanchéité (221) ;
dans lequel la source de vide et la source de gaz d'étanchéité sont chacune disposées en connexion fluidique contrôlable avec le récipient de déchargement de fer ; et
dans lequel le gaz d'étanchéité est un gaz non oxydant.

8. Système de production d'éponge de fer, le système comprenant :
- un agencement de chargement de minerai de fer selon l'une quelconque des revendications 1 à 6, et/ou un agencement de déchargement d'éponge de fer selon la revendication 7 ;
- un arbre de réduction directe (211) ; et
- une source de gaz d'appoint (220) disposée en connexion fluidique avec l'arbre de réduction directe.

9. Système selon la revendication 8, dans lequel la source de gaz d'appoint est un électrolyseur et le gaz d'appoint est de l'hydrogène.

10. Procédé de chargement de minerai de fer dans un arbre de réduction directe, le procédé comprenant les étapes suivantes :
a) le réglage (s303) d'une sortie de minerai d'un récipient de chargement de minerai dans un état scellé ;
b) le réglage (s305) d'une entrée de minerai du récipient de chargement de minerai dans un état ouvert ;
c) le chargement (s307) du récipient de chargement de minerai avec du minerai de fer via l'entrée de minerai ;
d) le réglage (s309) de l'entrée du minerai dans un état scellé ;
e) l'évacuation (s312) de gaz du récipient de chargement du minerai par application de vide ;
f) le remplissage (s313) du récipient de chargement du minerai avec un gaz d'étanchéité ; et
g) le réglage (s315) de la sortie de minerai dans un état ouvert pour charger le minerai de fer dans l'arbre de réduction directe ;
dans lequel le gaz d'étanchéité est un gaz non oxydant.

11. Procédé selon la revendication 10, dans lequel le gaz d'étanchéité est choisi dans la liste constituée par l'hydrogène, le méthane, le biogaz, le gaz de synthèse, le dioxyde de carbone, l'azote, le gaz de combustion purifié et leurs combinaisons.

12. Procédé selon l'une quelconque des revendications 10 à 11, comprenant en outre les étapes suivantes :
e0) l'élimination (s310) de gaz du récipient de chargement de minerai par application de vide ; et
f0) le remplissage (s311) du récipient de chargement de minerai avec un gaz inerte ;
dans lequel les étapes e0) et f0) sont effectuées après l'étape d) mais avant l'étape e).

13. Procédé selon la revendication 12, dans lequel le gaz inerte est choisi dans la liste constituée de dioxyde de carbone, d'azote, de gaz de combustion purifié et de combinaisons de ceux-ci.

14. Procédé selon l'une quelconque des revendications 12 à 13, dans lequel le gaz d'étanchéité et le gaz inerte sont identiques.

15. Procédé selon l'une quelconque des revendications 12 à 13, dans lequel le gaz d'étanchéité et le gaz inerte sont différents ; et
dans lequel le gaz d'étanchéité est choisi dans la liste constituée par l'hydrogène, le méthane, le biogaz, le gaz de synthèse, le dioxyde de carbone et des combinaisons de ceux-ci.

16. Procédé selon l'une quelconque des revendications 10 à 15, comprenant en outre les étapes suivantes :
h) le réglage de la sortie de minerai dans un état scellé ;
i) le retrait d'un gaz de procédé du récipient de chargement de minerai par application de vide ;
j) le remplissage du récipient de chargement de minerai avec un gaz choisi parmi l'air, un gaz inerte et des combinaisons de ceux-ci ; et
k) le réglage de l'entrée de minerai dans un état ouvert.

17. Procédé de déchargement d'éponge de fer à partir d'un arbre de réduction directe, le procédé comprenant les étapes suivantes :
i) le réglage (s403) d'une sortie de fer et d'une entrée de fer d'un récipient de déchargement de fer dans un état scellé ;
ii) l'évacuation (s405) de gaz du récipient de déchargement de fer par application de vide ;
iii) le remplissage (s407) du récipient de chargement de fer avec un gaz d'étanchéité ;
iv) le réglage (s409) d'une entrée de fer du récipient de déchargement de fer dans un état ouvert ;
v) le chargement (s411) du récipient de déchargement de fer avec de l'éponge de fer via l'entrée de fer ; et
vi) le réglage (s411) de l'entrée de fer dans un état scellé ; dans lequel le gaz d'étanchéité est un gaz non oxydant.

18. Procédé de réduction directe de minerai de fer, dans lequel le procédé comprend l'introduction d'un gaz d'étanchéité constitué essentiellement d'un gaz choisi parmi
l'hydrogène,
le méthane,
le biogaz,
le gaz de synthèse,
des combinaisons de dioxyde de carbone avec l'hydrogène, le méthane, le biogaz ou le biogaz de synthèse, et leurs combinaisons, dans un arbre de réduction directe en conjonction avec le chargement du minerai de fer dans l'arbre de réduction directe et/ou en conjonction avec le déchargement d'une éponge de fer depuis l'arbre de réduction directe, dans lequel le gaz d'étanchéité est introduit par un procédé de chargement de minerai de fer selon l'une quelconque des revendications 10 à 16, et/ou par un procédé de déchargement d'éponge de fer selon la revendication 17.
